(19) Europäisches Patentamt

European Patent Office

Office européen des brevets

(11) EP 2 709 065 A1

(12) EUROPEAN PATENT APPLICATION

(43) Date of publication:
19.03.2014 Bulletin 2014/12

(51) Int Cl.:
G06T 7/20 (2006.01)　　　G06K 9/00 (2006.01)

(21) Application number: 12184741.2

(22) Date of filing: 17.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Lakeside Labs GmbH
9020 Klagenfurt (AT)

(72) Inventors:
• Pletzer, felix
9020 Klagenfurt (AT)

• Tusch, Roland Dr.
9074 Keutschach (AT)
• Rinner, Bernhard Prof. Dr.
8061 St. Radegund (AT)
• Böszörmenyi, Laszlo Prof. Dr.
9073 Viktring (AT)

(74) Representative: Zimmermann, Tankred Klaus
Patentanwälte Schoppe, Zimmermann,
Stöckeler, Zinkler & Partner
Postfach 246
82043 Pullach bei München (DE)

(54) **Concept for counting moving objects passing a plurality of different areas within a region of interest**

(57) Detector for counting moving objects passing a plurality of different areas within a region of interest, wherein the detector is configured to detect in a frame of a video sequence a feature set comprising a plurality of feature points for each moving object, and to find in a subsequent frame of the video sequence the feature set of the moving object, and to determine a motion of the feature set in an expected movement direction of the moving object, and to determine transitions of occupation states of the plurality of different areas based on the motion of the feature set and a transition criterion, and to count the moving objects based on the transitions of the occupation states of the plurality of different areas.

FIG 5

**Description**

Embodiments of the present invention relate to a detector for counting moving objects passing a plurality of different areas within a region of interest. Further embodiments of the present invention relate to a method for counting moving objects passing a plurality of different areas within a region of interest. Some embodiments relate to a concept for robust traffic state estimation on smart cameras. Some embodiments relate to a concept for video-based traffic state detection.

Traffic information systems aim to provide reliable and fast traffic messages to advise drivers against obstructions, such as impeded road conditions and congestions. To generate traffic messages, different data sources such as drivers' reports, traffic sensors, or travel-times recorded by toll systems [M. Schneider, M. Linauer, N. Hainitz, and H. Koller. Traveler information service based on real-time toll data in Austria. Intelligent Transport Systems, IET, 3(2): 124-137, 2009] can be used. Moreover, traffic operators employ video surveillance to recognize interesting traffic situations. Automatic video analysis is mainly used to detect interesting situations such as traffic jams or impeded road conditions. The video data can either be analyzed centralized on a remote server or decentralized on smart cameras or roadside units. Many motorway operators maintain a huge installation of simple surveillance cameras providing pure encoded video streams on demand. This has the advantage that video analysis can be directly applied to such installations. However, centralized solutions have the drawback of high communication requirements and low scalability. In contrast, decentralized solutions perform local analysis of the captured video data and streams are only transmitted for verification if an interesting traffic situation has been detected.

Smart cameras integrate video sensing, video processing, and communication in a single device [M. Bramberger, A. Doblander, A. Maier, B. Rinner, and H. Schwabach. Distributed embedded smart cameras for surveillance applications. Computer, 39(2):68 - 75, Feb. 2006]. The acquired video data can be processed onboard in real-time. If the smart camera has detected an interesting traffic event, e.g., stationary traffic, the smart camera delivers an event description and video sequence of the event as visual proof.

Traffic state detection in the uncompressed and compressed video domains has been a well-studied research area for more than ten years. Traffic speed and density estimation is typically based on vehicle tracking or vehicle detection. Vehicle tracking either relies on motion analysis using background models or on feature tracking. However, despite significant research efforts, accurate real-time background modeling for embedded computer vision is still a major challenge.

Segmenting moving foreground objects from the background is the main approach used in background modeling. In [C. Stauffer and W. Grimson. Adaptive background mixture models for real-time tracking. In IEEE Conference on Computer Vision and Pattern Recognition, volume 2, pages 246-252, 1999.] and [Z. Zivkovic. Improved adaptive Gaussian mixture model for background subtraction. In 17th International Conference on Pattern Recognition, volume 2, pages 28-31, 2004.], background models have been proposed which adapt to changing light and weather conditions. Applying frame differencing with probability density functions to estimate the segmentation of background objects is proposed in [S.-C. S. Cheung and C. Kamath. Robust background subtraction with foreground validation for urban traffic video. EURASIP Journal on Applied Signal Processing, 14:2330-2340, 2005.].

Feature-based tracking methods typically employ corner features for vehicle tracking. In [D. Beymer, P. McLauchlan, B. Coifman, and J. Malik. A real-time computer vision system for measuring traffic parameters. In IEEE Conference on Computer Vision and Pattern Recognition, pages 495-501, 1997.], an algorithm employing Kalman filtering and correlation testing for tracking the features is described. A grouping module groups the features in order to segment the individual vehicles. In [F. Pletzer, R. Tusch, L. Boszormenyi, B. Rinner, O. Sidla, M. Harrer, and T. Mariacher. Feature-based level of service classification for traffic surveillance. In 14th Intl. IEEE Conference on Intelligent Transportation Systems (ITSC), pages 1015-1020, 2011.], a method for classifying the traffic state from optical flow-based motion features and edge-based density features is presented. The proposed method uses a Gaussian radial basis function network for traffic state classification and is also designed to run in real-time on smart cameras. The method reaches an average classification accuracy of 86.2%, but has not been evaluated under different weather conditions. Employing texture and edge features for traffic density estimation is proposed in [J. Chen, T. Evan, and L. Zhidong. A machine learning framework for real-time traffic density detection. Intl. Journal of Pattern Recognition and Artificial Intelligence, 23(07):1265-1284, 2009.]. Using a 21-dimensions feature, Hidden Markov Models are trained to estimate the traffic density state. The method was evaluated for different weather conditions and shows an average accuracy of 95.6%. However, this method estimates only the traffic density and is not designed for real-time execution on smart cameras.

Vehicle trackers utilizing vehicle detectors have shown promising results. In [P. M. Roth, S. Sternig, H. Grabner, and H. Bischof. Classifier grids for robust adaptive object detection. In IEEE Conference on Computer Vision and Pattern Recognition, pages 2727-2734, 2009., M. Pucher, D. Schabus, P. Schallauer, Y. Lypetskyy, F. Graf, H. Rainer, M. Stadtschnitzer, S. Sternig, J. Birchbauer, W. Schneider, et al. Multimodal highway monitoring for robust incident detection. In 13th Intl. IEEE Conference on Intelligent Transportation Systems (ITSC), pages 837-842, 2010.], the authors employ classifier grids with adaptive online learning for detecting cars. The feature-based KLT algorithm is used to calculate the velocity of vehicles. In [O. Sidla, E. Wildling, and Y. Lypetskyy. Vehicle detectionmethods for surveillance applications. In Proceedings of SPIE, volume 6384, 2006.] the authors discuss the principal component analysis (PCA) and histogram of gradients (HoG) approaches for vehicle detection. However, the detection rate of these approaches is usually affected by occlusions and difficult weather conditions. Therefore, in [H. Bischof, M. Godec, C. Leistner, B. Rinner, and A. Starzacher. Autonomous audio-supported learning of visual classifiers for traffic monitoring. Intelligent Systems, IEEE, 25(3):15-23, 2010.] multiple sensor data is exploited and classification rates are improved by co-training.

Therefore, it is the object of the present invention to provide a concept for detecting or estimating a traffic density that provides an improved robustness, accuracy and/or efficiency.

This object is solved by a detector according to claim 1, a system according to claim 12, a method according to claim 14, and a computer program according to claim 15.

Embodiments of the present invention provide a detector for counting moving objects passing a plurality of different areas within a region of interest, wherein the detector is configured to detect in a frame of a video sequence a feature set comprising a plurality of feature points for each moving object, and to find in a subsequent frame of the video sequence the feature set of the moving object, and to determine a motion of the feature set in an expected movement direction of the moving object, and to determine transitions of occupation states of the plurality of different areas based on the motion of the feature set and a transition criterion, and to count the moving objects based on the transitions of the occupation states of the plurality of different areas.

In embodiments, the detector can be configured to detect the feature set comprising the plurality of feature points of the moving object in the frame and to find the feature set comprising the same feature points in the subsequent frame, and to determine a motion of the feature set that is moving together with the moving object between the frame and the subsequent frame along the expected movement direction. Occupations of the plurality of different areas by the moving object (or feature set) change due to the motion of the feature set. Thereby, the detector does not only determine the transitions of the occupation states of the plurality of different areas based on the motion of the feature set, but rather in addition based on a transition criterion. Thereby, an accuracy or robustness in counting the moving objects based on the transitions of the occupation states can be increased.

Further embodiments of the present invention provide a system comprising a detector and a camera. The detector is configured to detect in a frame of a video sequence a feature set comprising a plurality of feature points for each moving object, and to find in a subsequent frame of the video sequence the feature set of the moving object, and to determine a motion of the feature set in an expected movement direction of the moving object, and to determine transitions of occupation states of the plurality of different areas based on the motion of the feature set and a transition criterion, and to count the moving objects based on the transitions of the occupation states of the plurality of different areas.

Further embodiments of the present invention provide a method for counting moving objects passing a plurality of different areas within a region of interest. A first step of the method comprises detecting in a frame of a video sequence a feature set comprising a plurality of feature points for each moving object. A second step of the method comprises finding in a subsequent frame of the video sequence the feature set of the moving object. A third step of the method comprises determining a motion of the feature set in an expected movement direction of the moving object. A fourth step of the method comprises determining transitions of occupation states of the plurality of different areas based on the motion of the feature set and a transition criterion. A fifth step of the method comprises counting the moving objects based on the transitions of the occupation states of the plurality of different areas.

Embodiments of the present invention are described herein making reference to the appended drawings.

Fig. 1       shows a block diagram of a detector for detecting a motion of a moving object according to an embodiment of the present invention.

Fig. 2       shows an illustrative view of the frame and the subsequent frame showing a moving object and an overlayed projection of matched feature points of the moving object between the frame and the subsequent frame.

Fig. 3       shows an illustrative view of the subsequent frame showing the moving object and an overlayed projection of a region of interest with motion vectors describing a motion of the feature points between the frame and the subsequent frame.

Fig. 4       shows an illustrative view of the frame and the subsequent frame showing a moving object and an overlayed projection of matched feature points between the frame and the subsequent frame.

Fig. 5       shows a block diagram of a detector for counting moving objects passing a plurality of different areas within a region of interest according to an embodiment of the present invention.

Fig. 6a    an illustrative view of the current frame showing a moving object and an overlayed projection of a region of interest.

Fig. 6b    an illustrative view of a moving edge mask determined by the detector for the current frame using edge masks for the current and earlier frames.

Fig. 7    shows a state diagram of the occupation states for each area of the plurality of different areas.

Fig. 8    shows in a table possible transition states for each area of the plurality of different areas.

Fig. 9    shows a block diagram of a system according to an embodiment of the present invention.

Fig. 10    shows a flow chart of a video analysis method for traffic state detection according to an embodiment.

Fig. 11    shows in a table a level of service definition for a single lane, depending on the measured mean speed and traffic density.

Fig. 12a    shows an illustrative view of a frame of the video sequence showing a fixed traffic area and an overlayed projection of a plurality of calibration points.

Fig. 12b    shows an illustrative view of a frame of the video sequence showing the fixed traffic area and an overlayed projection of a grid obtained based on camera calibration parameters.

Fig. 13a    shows a picture acquired by the smart camera and an overlayed projection of the region of interest.

Fig. 13b    shows a picture acquired by the smart camera under dry road and small shadow conditions.

Fig. 13c    shows a picture acquired by the smart camera under large shadow conditions.

Fig. 13d    shows a picture acquired by the smart camera under water on the road conditions.

Fig. 14    shows in a table the distribution of the test data for the different road conditions and traffic states.

Fig. 15a    shows in a diagram evaluation results of the traffic state detection method based on precision, recall and accuracy under large shadow conditions.

Fig. 15b    shows in a diagram evaluation results of the traffic state detection method based on precision, recall and accuracy under small shadow/no shadow conditions.

Fig. 15c    shows in a diagram evaluation results of the traffic state detection method based on precision, recall and accuracy under wet road/water on road conditions.

Fig. 15d    shows in a diagram evaluation results of the traffic state detection method based on precision, recall and accuracy under dry road conditions.

Fig. 15e    shows in a diagram evaluation results of the traffic state detection method based on precision, recall and accuracy for the entire test set.

Fig. 16    shows in a table the mean absolute error of traffic speed and traffic density for the different traffic states, evaluated on the entire test set.

Fig. 17    shows a flowchart of a method for detecting a motion of a moving object according to an embodiment.

Fig. 18    shows a flowchart of a method for counting moving objects passing a plurality of different areas within a region of interest according to an embodiment.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

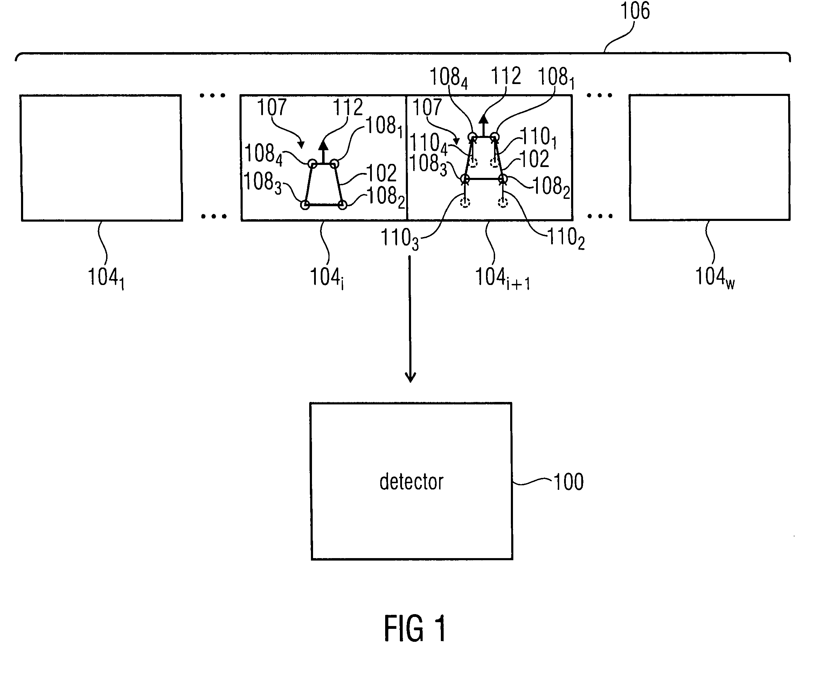

Fig. 1 shows a block diagram of a detector 100 for detecting a motion of a moving object 102 according to an embodiment of the present invention. The detector 100 is configured to detect in a frame $104_i$ of a video sequence 106 a feature set 107 comprising a plurality of feature points $108_1$ to $108_n$ of the moving object 102, and to find in a subsequent frame $104_{i+1}$ of the video sequence 106 the feature set 107 of the moving object 102, and to determine, for the feature points $108_1$ to $108_n$, motion vectors $110_1$ to $110_n$ describing a motion of the feature points $108_1$ to $108_n$ between the frame $104_i$ and the subsequent frame $104_{i+1}$, and to select, from the motion vectors $110_1$ to $110_n$, valid motion vectors based on an expected movement direction 112 of the moving object 102, and to detect a motion of the moving object 102 based on the valid motion vectors.

In embodiments, the detector 100 can be configured to detect the feature set 107 comprising the plurality of feature points $108_1$ to $108_n$, e.g. corners, of the moving object 102 in the frame $104_i$ and to find the feature set 107 comprising the same feature points $108_1$ to $108_n$ in the subsequent frame $104_{i+1}$. The feature points $108_1$ to $108_n$ of the feature set 107 move together with the moving object 102 between the frame $104_i$ and the subsequent frame $104_{i+1}$. Thus, the motion of the feature points $108_1$ to $108_n$ between the frame $104_i$ and the subsequent frame $104_{i+1}$ can be described by motion vectors $110_1$ to $110_n$. Thereby, each of the motion vectors $110_1$ to $110_n$ may point from the coordinates of the respective feature point in the frame $104_{i+1}$ to the coordinates of the same feature point in the subsequent frame $104_{i+1}$. The detector 100 can be configured to select, from the motion vectors $110_1$ to $110_n$, valid motion vectors based on the expected movement direction 112 of the moving object 102, e.g., to filter out non-valid motion vectors, and to detect the motion of the moving object 102 based on the valid motion vectors.

Note that in Fig. 1, the feature set 107 comprises four feature points $108_1$ to $108_n$ (n = 4) of the moving object 102 for illustration purposes. Naturally, the feature set 107 can comprise up to n feature points $108_1$ to $108_n$, wherein n is a natural number greater than or equal to two (n ≥ 2). For example, in some embodiments, the feature set 107 can comprise 10, 20, 30, 40, 50, 60, 70, 80, 90 or 100 feature points $108_1$ to $108_n$ of the moving object 102.

Moreover, observe that the frame $104_i$ and the subsequent frame $104_{i+1}$ can be part of a video sequence 106 comprising up to w frames, wherein w can be a natural number greater than or equal to two (w ≥ 2). In some embodiments, the video sequence 106 can also comprise an earlier frame $104_{i-1}$ preceding the frame $104_i$, and a further subsequent frame $104_{i+2}$ following the subsequent frame $104_{i+1}$. In addition, in some embodiments, the frame $104_i$ and the subsequent frame $104_{i+1}$ can be immediately successive frames of the video sequence 106. Similarly, the earlier frame $104_{i-1}$ and the frame $104_i$ can be immediately successive frames of the video sequence 106.

As shown in Fig. 1, the feature points $108_1$ to $108_n$ of the moving object 102 in the frame $104_i$ can be the same feature points as the feature points $108_1$ to $108_n$ of the moving object 102 in the subsequent frame $104_{i+1}$, but having different coordinates, e.g., with respect to the frames $104_i$ and $104_{i+1}$ of the video sequence 106. Thus, the motion vectors $110_1$ to $110_n$ describe a motion of the feature points $108_1$ to $108_n$ of the moving object 102 between the frame $104_i$ and the subsequent frame $104_{i+1}$. Note that the detector 100 can be configured to detect a feature set 107 comprising a plurality of known and/or new feature points $108_1$ to $108_n$ for each pair of subsequent frames of the video sequence 106. For example, the feature points $108_1$ to $108_n$ of the moving object 102 between the subsequent frame $104_i$ and a further subsequent frame $104_{i+2}$ can include new and/or known feature points. While the moving object 102 advances between the frames of the video sequence 106, new feature points of the moving object 102 may appear, while known feature points of the moving object 102 may disappear.

In some embodiments, the detector 100 can be configured to detect the feature set 107 comprising the plurality of feature points $108_1$ to $108_n$ by detecting corners of the moving object 102.

For example, to obtain the motion vectors $110_1$ to $110_n$, the Kanade-Lucas-Tomasi (KLT) feature tracking method can be used [B. D. Lucas and T. Kanade. An iterative image registration technique with an application to stereo vision. In Proc. of the 7th Intl. Joint Conference on Artificial Intelligence, pages 674-679, 1981]. Using corner detection, the KLT method can select a number of distinctive image points $p_{i,j}$ and search for the corresponding matched feature points $\acute{p}_{i,j}$ in the subsequent frame. Using a feature pair $(p_{i,j}, \acute{p}_{i,j})$, the j-th motion vector from frame $i$ to frame $i+1$ can be defined as:

$$\vec{m}_{i,j} = \overrightarrow{p_{i,j}, \acute{p}_{i,j}} \qquad (1)$$

Thereby, the image point $p_{i,j}$ can describe the coordinate of the feature point $108_j$ of the plurality of feature points $108_1$ to $108_n$ in the frame $104_i$, wherein the image point $\dot{p}_{i,j}$ can describe the coordinates of the feature point $108_j$ of the plurality of feature points $108_1$ to $108_n$ in the subsequent frame $104_{i+1}$, wherein j can be a natural number greater than or equal to one and smaller than or equal to n ($1 \le j \le n$).

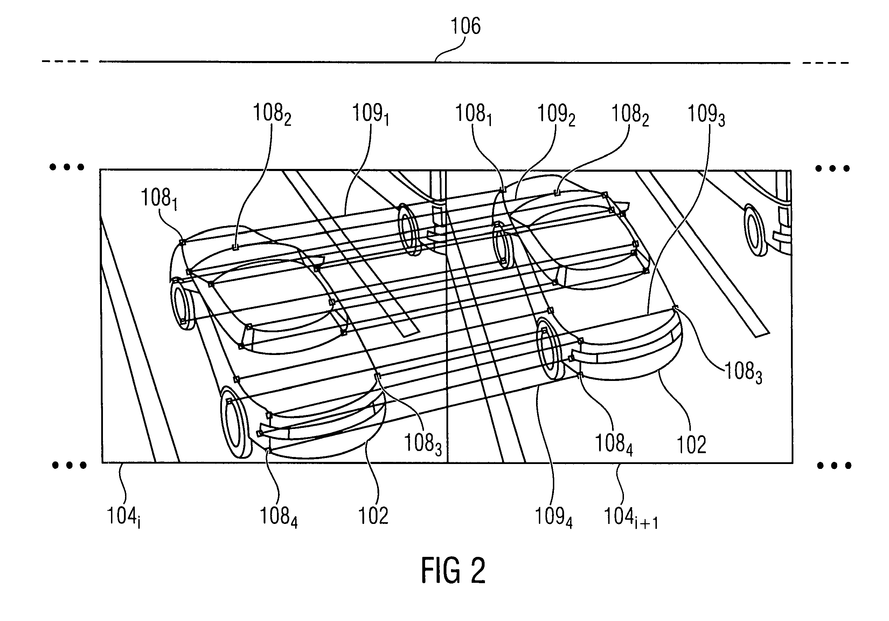

In the following, embodiments and implementation examples of the detector 100 shown in Fig. 1 are described in detail making reference to Figs. 2 to 4. For illustration purposes, it is thereby assumed that the video sequence 106 comprising the frame $104_i$ and the subsequent frame $104_{i+1}$ is provided by a traffic camera directed to a fixed traffic area, e.g. a lane of a road, wherein the moving object 102 can be a vehicle, e.g., a car, truck or motorbike, passing the traffic area.

Fig. 2 shows an illustrative view of the frame $104_i$ and the subsequent frame $104_{i+1}$ showing a moving object 102 and an overlayed projection of matched feature points $108_1$ to $108_n$ between the frame $104_i$ and the subsequent frame $104_{i+1}$. Thereby, in Fig. 2, the lines $109_1$ to $109_n$ indicate matched feature points $108_1$ to $108_n$ between the frame $104_i$ and the subsequent frame $104_{i+1}$. In other words, Fig. 2 shows a vehicle 102 with KLT feature matching.

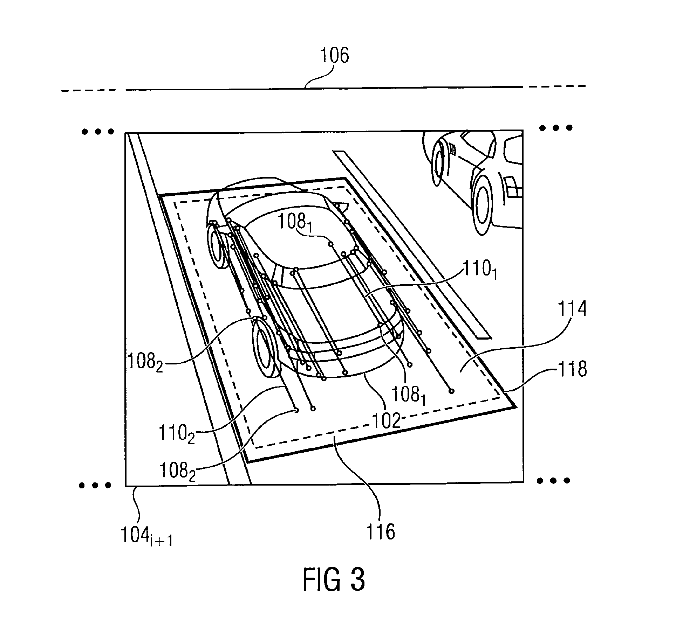

Fig. 3 shows an illustrative view of the subsequent frame $104_{i+1}$ showing the moving object 102 and an overlayed projection of the region of interest 114 with motion vectors $110_1$ to $110_n$ describing a motion of the feature points $108_1$ to $108_n$ between the frame $104_i$ and the subsequent frame $104_{i+1}$.

For example, the motion vector $110_1$ describes a motion of the feature point $108_1$ between the frame $104_i$ and the subsequent frame $104_{i+1}$, wherein the motion vector $110_2$ describes a motion of the feature point $108_2$ between the frame $104_i$ and the subsequent frame $104_{i+1}$.

As indicated in Fig. 3, in some embodiments, the detector 100 can be configured to detect the feature set 107 comprising the plurality of feature points $108_1$ to $108_n$ in the region of interest 114 in the frame $104_i$, and to find the feature set 107 in the subsequent frame $104_{i+1}$ in the region of interest 114.

Moreover, in some embodiments, the detector 100 can be configured to discard feature points of the feature set 107 that are located within a defined margin 116 to a border 118 of the region of interest 114.

In other words, Figs. 2 and 3 show an example for the matched features $108_1$ to $108_n$ and the corresponding motion vectors $110_1$ to $110_n$. Although KLT feature tracking is considered relatively robust, incorrect feature matches (outliers) can occur. To avoid outliers disrupting the speed estimations, a cascaded outlier detection can be applied. Feature points are only computed within a predefined ROI (region of interest) 114 and cannot be tracked outside the ROI 114. Since appearing and disappearing feature points often lead to incorrect feature matches, any feature points within a given margin 116 to the border 118 of the ROI 114 can be ignored.

Furthermore, in some embodiments, the detector 100 can be configured to select, from the motion vectors $110_1$ to $110_n$, motion vectors pointing in a direction that deviates less than 20° (or 1°, 3°, 5°, 10°, 15°, 25° or 30°) from the expected movement direction 112 of the moving object 102 in order to obtain the valid motion vectors.

In other words, the direction of the motion vectors $110_1$ to $110_n$ can be also well suited for detecting outliers. For example, the y-axis of the world coordinate system can be defined heading towards the driving direction 112 of the vehicles 102. Ideally, a valid motion vector should be parallel with the y-axis. In practice, however, the limited accuracy of the calibration parameters may induce small deviations. Therefore, the deviation angle to the y-axis can be calculated for all motion vectors $110_1$ to $110_n$, where all vectors can be omitted, where the deviation angle exceeds a certain threshold.

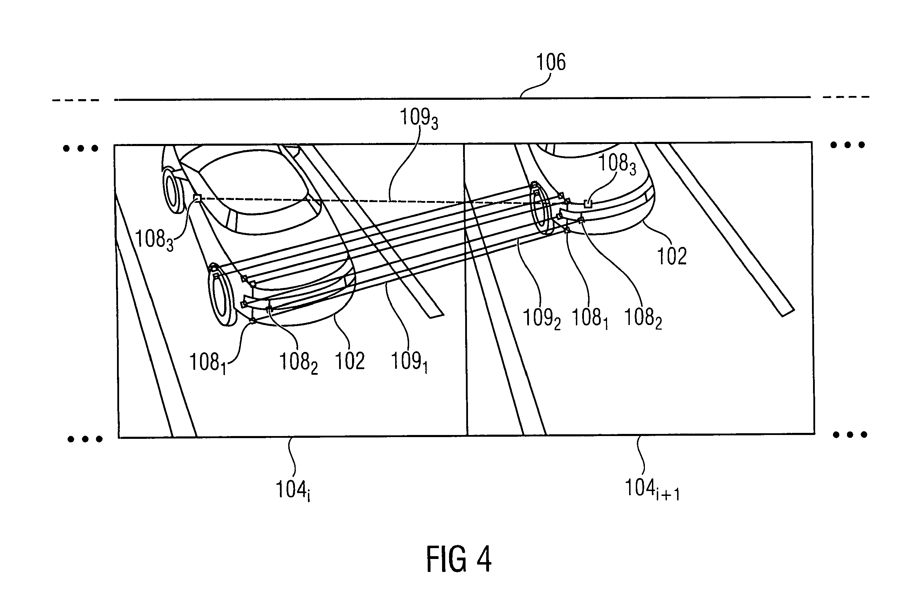

Fig. 4 shows an illustrative view of the frame $104_i$ and the subsequent frame $104_{i+1}$ showing a moving object 102 and an overlayed projection of matched feature points $108_1$ to $108_n$ between the frame $104_i$ and the subsequent frame $104_{i+1}$. In contrast to Fig. 2, in Fig. 4 also an incorrect match of feature points between the frame $104_i$ and the subsequent frame $104_{i+1}$ is shown. The feature point $108_3$ of the moving object 102 in the frame $104_i$ does not match the feature point $108_3$ of the moving object 102 in the subsequent frame $104_{i+1}$ (indicated by the dashed line $109_3$).

Therefore, in some embodiments, the detector 100 can be configured to select, from the feature points $108_1$ to $108_n$, valid feature points based on a comparison of allocations of the feature points $108_1$ to $108_n$ with respect to each other in the frame $114_i$ and the subsequent frame $114_{i+1}$, and to determine, only for the valid feature points, the motion vectors $110_1$ to $110_n$.

In other words, in the final stage of the outlier cascade, advantage of the rigidity of the moving objects 102 can be taken. Due to the rigidity of objects 102, the relative order of feature points $108_1$ to $108_n$ (with respect to the x-axis and y-axis) cannot change.

Fig. 4 shows an example, where the relative order of feature points $108_1$ to $108_n$ is changed due to an incorrect feature match. The dashed line $108_3$ (incorrect feature match) crosses a number of valid matchings. In a valid set of motion vectors, for any pair of feature points ($p_{i,j}$, $p_{i,k}$) and their corresponding feature matches ($\dot{p}_{i,j}$, $\dot{p}_{i,k}$), the following condition must be true.

$$c_{i,j,k} = \left[ \left( X(p_{i,j}) \geq X(p_{i,k}) \right) \rightarrow \left( X(\acute{p}_{i,j}) \geq X(\acute{p}_{i,k}) \right) \right]$$
$$\wedge \left[ \left( Y(p_{i,j}) \geq Y(p_{i,k}) \right) \rightarrow \left( Y(\acute{p}_{i,j}) \geq Y(\acute{p}_{i,k}) \right) \right]$$

$$(2)$$

$X(p_{i,j})$ represents the x-coordinate, and $Y(p_{i,j})$ the y-coordinate of feature point $p_{i,j}$, where $X(p_{i,k})$ represents the x-coordinate, and $Y(p_{i,k})$ the y-coordinate of feature point $p_{i,k}$. Using equation (2), the outlier detector can create a consensus matrix C (upper triangular matrix), that contains the $c_{i,j,k}$ for feature matches in the ROI 114. Further, for each $(p_{i,j}, p_{i,k})$, the number of contradictions (i.e., the number of $c_{i,j,k}$ that evaluate false) are written to the main diagonal of matrix C. After that, the algorithm may iteratively reject the motion vectors $110_1$ to $110_n$ with the maximum number of contradiction until all elements in the main diagonal are zero (i.e., consensus is reached).

In some embodiments, the detector 100 can be configured to determine a speed of the moving object 102 based on lengths of the valid motion vectors and a time period between the frame $104_i$ and the subsequent frame $104_{i+1}$.

Moreover, in some embodiments, the detector 100 can be configured to project video frame coordinates of the valid motion vectors into world coordinates on a predefined plane, and to determine the lengths of the valid motion vectors using the world coordinates.

For example, the detector 100 can be configured to project the video frame coordinates of the valid motion vectors into the world coordinates using a lookup table. Naturally, also a calculation method can be used in order to project the video frame coordinates of the valid motion vectors into the world coordinates.

In other words, the speed can be calculated from the median length of motion vectors. For that reason, the coordinates of the valid motion vectors are back-projected to metric world coordinates on a predefined plane. For reasons of efficiency, the mapping to world coordinates for the individual pixels can be stored in a lookup table. Using the metric length of motion vectors along with the known frame time r, for every motion vector $\overline{m}_{i,j}$ the corresponding speed $v(\overline{m}_{i,j})$ can be computed as follows:

$$v\left(\overrightarrow{m}_{i,j}\right) = \frac{Y\left(w(\acute{p}_{i,j})\right) - Y\left(w(p_{i,j})\right)}{\tau}$$

$$(3)$$

In equation (3), $Y(w(p_{i,j}))$ denotes the y-component of the back-projected feature point $p_{i,j}$. Since the direction of the y-axis can be chosen in driving direction, the x-component of the world coordinates can be ignored.

Furthermore, in some embodiments, the detector 100 can be configured to detect in the subsequent frame $104_{i+1}$ of the video sequence a further (or new) feature set 107 comprising a plurality of further (or known and/or new) feature points $108_1$ to $108_n$ of the moving object 102, and to find in a further subsequent frame $104_{i+2}$ of the video sequence 106 the further feature set 107 of the moving object 102, and to determine, for the further feature points $108_1$ to $108_n$, further motion vectors describing a motion of the further feature points $108_1$ to $108_n$ between the subsequent frame $104_{i+1}$ and the further subsequent frame $104_{i+2}$, and to select, from the further motion vectors $110_1$ to $110_n$, valid further motion vectors based on the expected movement direction 112 of the moving object 102, and to further detect the motion of the moving object 102 based on the valid further motion vectors. Thereby, the detector 100 can be further configured to determine the speed of the moving object 102 based on lengths of the valid further motion vectors and a time period between the subsequent frame $104_{i+1}$ and the further subsequent frame $104_{i+2}$.

As already mentioned, the detector 100 can be configured to detect a new (or further) feature set 107 comprising a plurality of known and/or new feature points $108_1$ to $108_n$ for each pair of subsequent frames of the video sequence 106. For example, the feature points $108_1$ to $108_n$ of the moving object 102 between the subsequent frame $104_{i+1}$ and the further subsequent frame $104_{i+2}$ can be, but do not have to be, the same feature points $108_1$ to $108_n$ as the feature points $108_1$ to $108_n$ between the frame $104_i$ and the subsequent frame $104_{i+1}$.

In some embodiments, the detector 100 can be configured to determine the speed of the moving object 120 by averaging the speeds described by the lengths of the valid motion vectors and the further valid motion vectors.

In other words, to compute the mean speed estimation $\overline{\overline{v}}(r)$ for the r-th observation period, the median of calculated speed values can be used.

$$\tilde{v}(r) = \underset{r \cdot N_f \leq i < (r+1)N_f}{median} \left( v(\vec{m}_{i,j}) \right), \forall \vec{m}_{i,j} \in \mathcal{R}_i \tag{4}$$

In equation (4), $N_f$ denotes the number of frames for the observation time (e.g., number of frames per minute) and $R_i$ is the set of valid motion vectors in frame $i$.

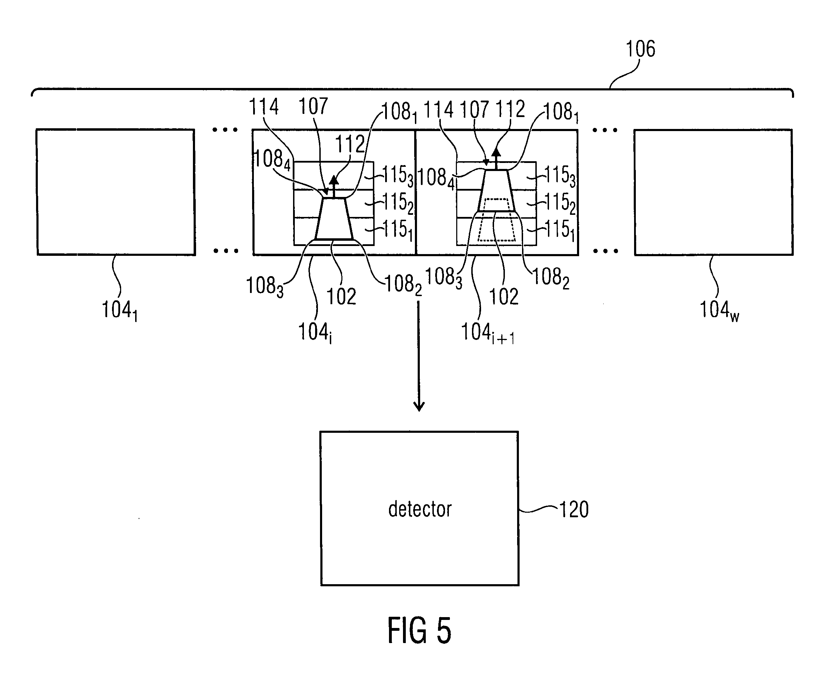

Fig. 5 shows a block diagram of a detector 120 for counting moving objects 102 passing a plurality of different areas $115_1$ - $115_s$ within a region of interest 114 according to an embodiment of the present invention. The detector 120 is configured to detect in a frame $104_i$ of a video sequence 106 a feature set 107 comprising a plurality of feature points $108_1$ - $108_m$ for each moving object 102, and to find in a subsequent frame $108_{i+1}$ of the video sequence 106 the feature set 107 of the moving object 102, and to determine a motion of the feature set 107 in an expected movement direction 112 of the moving object 102, and to determine transitions of occupation states of the plurality of different areas $115_1$ - $115_s$ based on the motion of the feature set 107 and a transition criterion, and to count the moving objects 102 based on the transitions of the occupation states of the plurality of different areas $115_1$ - $115_s$.

In embodiments, the detector 120 can be configured to detect the feature set 107 comprising the plurality of feature points $108_1$ to $108_m$ of the moving object 102 in the frame $104_i$ and to find the feature set 107 comprising the same feature points $108_1$ to $108_m$ in the subsequent frame $104_{i+1}$, and to determine a motion of the feature set 107 that is moving together with the moving object 102 between the frame $104_i$ and the subsequent frame $104_{i+1}$ along the expected movement direction 112. Occupations of the plurality of different areas $108_1$ to $108_m$ by the moving object 102 (or by the feature set 107) change due to the motion of the feature set 107. Thereby, the detector 102 does not only determine the transitions of the occupation states of the plurality of different areas $108_1$ to $108_m$ based on the motion of the feature set 107, but rather in addition based on a transition criterion. Thereby, an accuracy or robustness in counting the moving objects 102 based on the transitions of the occupation states can be increased.

Note that in Fig. 5, the region of interest 114 comprises three different areas $115_1$ to $115_s$ (s = 3) for illustration purposes. Naturally, the region of interest 114 can comprise up to s different areas $115_1$ to $115_s$, wherein s is a natural number greater than or equal to two (s ≥ 2). For example, in some embodiments, the region of interest 114 can comprise 5, 10, 15, 20, 30, 40, 50, 60, 70, 80, 90 or 100 different areas $115_1$ to $115_s$. Moreover, in the following, a specific area of the plurality of different areas $115_1$ to $115_s$ can be indicated with the reference numeral $115_j$, wherein j is a natural number greater than or equal to one, and smaller than or equal to s (1 ≤ j ≤ s).

In addition, observe that in Fig. 5, the feature set 107 exemplarily comprises four feature points $108_1$ to $108_m$ (m = 4) of the moving object 102. Of course, the feature set can comprise up to m feature points $108_1$ to $108_m$, wherein m is a natural number greater than or equal to two (m ≥ 2). For example, in some embodiments, the feature set can comprise 5, 10, 15, 20, 30, 40, 50, 60, 70, 80, 90 or 100 feature points of the moving object 102.

According to some embodiments, the plurality of feature points $108_1$ to $108_m$ of the moving objects 102 can be edges of the moving objects 102. Moreover, the plurality of feature points $108_1$ to $108_m$ of the moving objects can be pixels of the video sequence having a characteristic property, such as a color or change in color effected by the moving objects 102 passing the region of interest.

The frame $104_i$ and the subsequent frame $104_{i+1}$ can be part of a video sequence 106 comprising up to w frames, wherein w can be a natural number greater than or equal to two (w ≥ 2). In some embodiments, the video sequence 106 can also comprise an earlier frame $104_{i-1}$ preceding the frame $104_i$, and a further subsequent frame $104_{i+2}$ following the subsequent frame $104_{i+1}$. In addition, in some embodiments, the frame $104_i$ and the subsequent frame $104_{i+1}$ can be immediately successive frames of the video sequence 106. Similarly, the earlier frame $104_{i-1}$ and the current frame $104_i$ can be immediately successive frames of the video sequence 106.

In some embodiments, the different areas of the plurality of different areas $115_1$ to $115_s$ can be stripes arranged parallel to each other in a single-row. Moreover, the plurality of different areas $115_1$ to $115_s$ can be aligned along an expected movement direction 112 of the one or more objects 102.

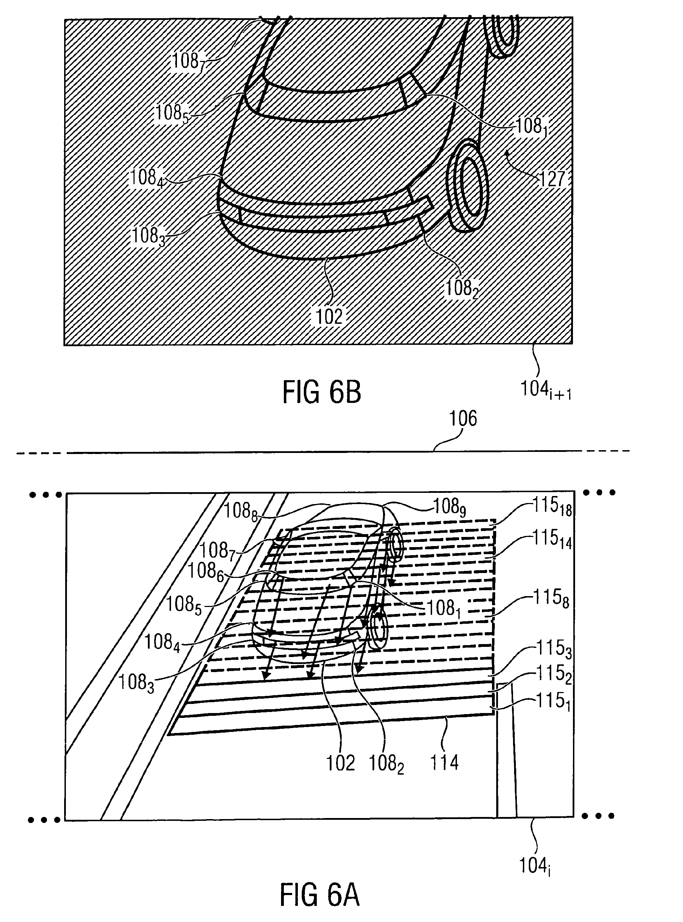

In the following, embodiments and implementation examples of the detector 120 shown in Fig. 5 are described in detail making reference to Figs. 6a and 6b. For illustration purposes, it is thereby assumed that the video sequence 106 comprising the frame $104_i$ and the subsequent frame $104_{i+1}$ is provided by a traffic camera directed to a fixed traffic area, e.g. a lane of a road, wherein the moving object 102 can be a vehicle, e.g., a car, truck or motorbike, passing the traffic area.

In addition, subsequently it is assumed that the feature set 107 comprising the plurality of feature points $108_1$ to $108_m$ of the moving object 102 is an edge mask 107 comprising a plurality of edges $108_1$ to $108_m$ of the vehicle 102 (moving object). Nevertheless, the concept of the present invention is not limited to such embodiments. As already mentioned, the plurality of feature points $108_1$ to $108_m$ of the vehicle 102 can also be a contiguous group of pixels having a characteristic property. For example, the plurality of feature points $108_1$ to $108_m$ can be pixels having a color different from the color of the fixed traffic area (e.g., road or street), e.g., pixels of a red, blue, yellow, green, etc. car passing the fixed traffic area. Moreover, in low light conditions, the plurality of feature points $108_1$ to $108_m$ can be the pixels having the colors of the lights of the vehicles 102, e.g., red pixels in case of back lights and (almost) white pixels in case of front lights.

Fig. 6a shows an illustrative view of the frame $104_i$ showing a moving object 102 and an overlayed projection of a region of interest 114. In this embodiment, the region of interest comprises 15 different areas $115_1$ to $115_s$ (s = 15). The 15 different areas $115_1$ to $115_s$ (s = 15) can be stripes arranged parallel to each other in a single-row and can be aligned along the expected movement direction 112 of the one or more objects 102.

As already indicated, the detector 120 can also be configured to detect in an earlier frame $104_{i-1}$ of the video sequence 106 a feature set 107 comprising a plurality of feature points $108_1$ - $108_m$ (e.g., edges) for each moving object 102, and to find in a frame $104_{i+1}$ of the video sequence 106 the feature set 107 of the moving object 102, and to determine a motion of the feature set 107 in an expected movement direction 112 of the moving object 102, and to determine transitions of occupation states of the plurality of different areas $115_1$ - $115_s$ based on the motion of the feature set 107 and a transition criterion, and to count the moving objects 102 based on the transitions of the occupation states of the plurality of different areas $115_1$ - $115_s$.

In some embodiments, the detector 120 can be configured to determine occupation conditions of the plurality of different areas $115_1$ - $115_s$ by the one or more objects 102 based on the motion of the feature set 107, and to determine the transitions of the occupation states based on the occupation conditions of the plurality of different areas $115_1$ - $115_s$.

For example, as shown in Fig. 6a, the detector 120 may determine that the occupation condition of the areas $115_5$ to $115_{18}$ of the plurality of different areas $115_1$ to $115_s$ (s = 15) is active, i.e., that the areas $115_5$ to $115_{18}$ are occupied by the object 102, where the detector 120 may determine that the occupation condition of the areas $115_1$ to $115_4$ of the plurality of different areas $115_1$ to $115_s$ (s = 15) is inactive, i.e., that the areas $115_1$ to $115_4$ are not occupied by the object 102.

In other words, for traffic density estimation, edge information within the ROI 114 can be used to obtain a statistical vehicle 102 count. Therefore, the ROI 114 can be further subdivided in a number of disjoint ordinates. For each frame, the method can apply canny edge detection to obtain a binary edge mask $e(x, y)_i$ 107 for the frame $i$. Using the binary edge masks 107 of the current and preceding frame $104_i$ and $104_{i-1}$, the moving edge mask $E(x, y)_i$ 127 can be calculated as described in equation (5).

$$E(x,y)_i = e(x,y)_i - [e(x,y)_i \wedge e(x,y)_{i-1}], i < 0 \qquad (5)$$

In equation (5), $\wedge$ denotes the bit-wise AND operation. An example for a moving edge mask 127 is shown in Fig. 6b. Using the moving edge mask $E(x, y)$ 127, the traffic density estimation method according to the concept of the present invention can calculate the number of edge pixels (edge count) for the individual stripes $s_j$ (of the plurality of different areas or stripes $115_1$ to $115_s$). To obtain a metric unit (e.g., pixel = m$^2$), the edge density $\hat{E}(s_j)_i$ of stripe $s_j$ can be defined as the number of moving edge pixels divided by the (predefined) area of the stripes $A_{stripe}$, as described by equation (6).

$$\hat{E}(s_j)_i = \frac{1}{A_{stripe}} \cdot \sum_{\forall (x,y) \in s_j} E(x,y)_i \qquad (6)$$

Furthermore, in some embodiments, the detector 120 can be configured to provide an occupation value for each area $115_j$ of the plurality of different areas $115_1$ to $115_s$, the occupation value indicating that the occupation condition of the respective area $115_j$ is active or inactive. Thereby, the detector 120 can be configured to provide the occupation value indicating an active occupation condition of the respective area $115_j$ if the edge density of the respective area $115_j$ exceeds a predefined edge density and indicating an inactive occupation condition of the respective area $115_j$ if the edge density of the respective area $115_j$ is equal to or smaller than the predefined edge density.

For example, assuming that the predefined edge density is exceeded in the area $115_4$, the occupation value for the area $115_4$ may indicate the active occupation condition of the area $115_4$, where assuming that the predefined edge density is not exceeded in the area $115_3$ the occupation value for the area $115_3$ may indicate the inactive occupation condition of the area $115_3$. Similarly, the occupation values for the areas $115_5$ to $115_{18}$ may indicate active occupation conditions of the respective areas $115_5$ to $115_{18}$, where the occupation values for the areas $115_1$ to $115_3$ may indicate inactive occupation conditions of the respective areas $115_1$ to $115_3$.

In other words, using the edge density $\hat{E}(s_j)_i$, the occupation state $occ(s_j)$ of a stripe $s_j$ can be defined in equation (7). In this equation, $E_{thres}$ denotes a predefined threshold parameter.

$$occ(s_j) = \begin{cases} 1 & if \; \hat{E}(s_j)_i > E_{thres} \\ 0 & else \end{cases} \qquad (7)$$

For ideal conditions (i.e., low noise), the state transitions of $occ(s_j)$ can directly be used for statistical vehicle 102 counting. However, especially for difficult environment conditions (e.g., reflecting lights, moving shadows), it shows that simple transition counting of $occ(s_j)$ does not lead to accurate results. To increase the robustness of the counting method, additional constraints can be introduced to the valid state transition of the individual stripes $115_j$ of the plurality of stripes $115_1$ to $115_s$. These constraints can make use of one or more of the following assumption's. First, vehicles move towards a (predefined) driving direction 112. Second, (all) vehicles 102 within the ROI 114 move at constant velocity. Third, (all) vehicles 102 move through the entire ROI 112. Fourth, (all) vehicles 102 have a minimum length of 1.5 (or 1.0, 2.0, 2.5, 3.0, 3.5, or 4.0) meters. Fifth, vehicles 102 do not move faster than 1 (or 2, 3, 4, or 5) stripe(s) per frame. Especially for stationary traffic situations (e.g., stop and go traffic), the second constraint can be violated, which leads to potential overestimation of traffic density. However, as the below evaluation shows, this overestimation does not have a major impact on the accuracy of stationary traffic detection.

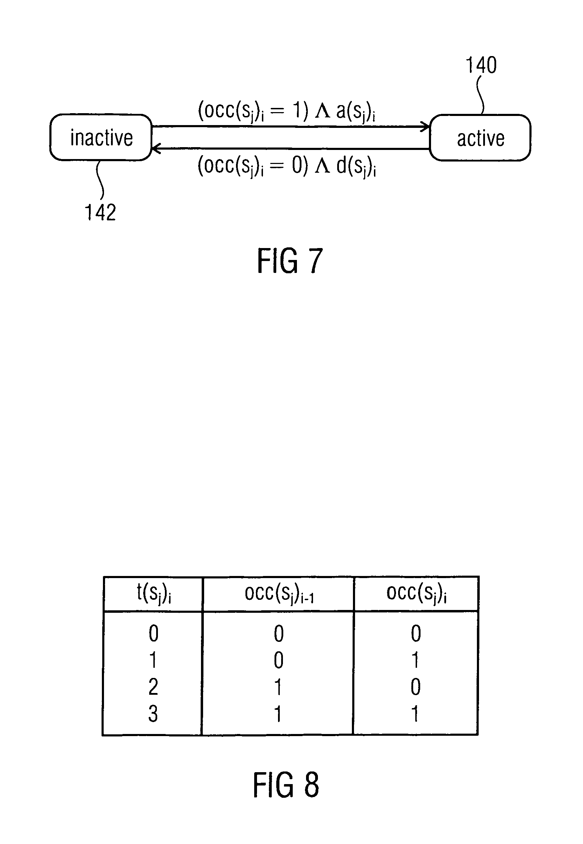

Fig. 7 shows a state diagram of the occupation state of the respective area $115_j$ of the plurality of different areas $115_1$ to $115_s$. The active occupation state 140 indicates an active occupation of the respective area $115_j$, wherein the inactive occupation state 142 indicates an inactive occupation of the respective area.

In some embodiments, the detector 120 can be configured to determine for each area $115_j$ of the plurality of different areas $115_1$ to $115_s$ a transition of the occupation state from inactive to active, if the occupation condition is active and if an active transition criterion of the transition criterion is fulfilled.

The active transition criterion may state that the respective area $115_j$ is part of a cluster of areas, the cluster of areas comprising at least three contiguous areas of the plurality of different areas $115_1$ to $115_s$.

Furthermore, in some embodiments, the detector 120 can be configured to determine for each area $115_j$ of the plurality of different areas $115_1$ to $115_s$ a transition of the occupation state from active 140 to inactive 142, if the occupation condition is inactive and if an inactive transition criterion of the transition criterion is fulfilled.

The inactive transition criterion may state that the occupation conditions of areas of the plurality of different areas $115_1$ to $115_s$ neighboring the respective area $115_j$ indicate a movement of the moving object 102 along the expected movement direction 112.

In other words, to implement robust statistical counting, the two stripe states active 140 and inactive 142 can be introduced. The state diagram for the two stripe states is shown in Figure 7 . The state transitions not only depend on the occupation state $occ(s_j)$, but also on the constraints $a(s_j)_i$ and $d(s_j)_i$ defined in equation (8).

$$a(s_j)_i = (j = 1) \vee \left( occ(s_{j-1})_i = 1 \right) \wedge inCluster(s_j, i)$$
$$d(s_j)_i = \left( t(s_{j+1}) \neq 0 \right) \wedge \left( t(s_{j-1}) \neq 1 \right) \qquad (8)$$

The *inCluster* function returns true if the stripe $115_j$ is part of a cluster of active stripes with a predefined cluster size $C_s$. Furthermore, the constraints also use the temporal transition state $t(s_j)_i$ of the neighboring stripes. The four possible transition states are listed in the table shown in Fig. 8. To compute the vehicle count, the algorithm maintains a transition count $c(s_j)$ for each stripe. The transition count can be incremented on every *Active* to *Inactive* state transition and reset after each observation period. The traffic flow estimation (or object flow) $q$ can be computed as median transition count of all stripes $s_j$, as described in equation (9).

$$\tilde{q} = \frac{median \; c(s_j)}{C_s \leq j \leq (N_s - C_s)} \qquad (9)$$

Thereby, $N_s$ denotes the number of stripes $115_1$ to $115_s$ in the ROI 114.

Using the flow estimate q and the corresponding speed estimate $\bar{\bar{v}}$ the traffic density estimate $\tilde{K}$ can be calculated as shown in equation (10).

$$\tilde{K} = \frac{\tilde{q}}{\bar{\bar{v}}} \cdot \lambda_s \qquad (10)$$

Here, $\lambda_s$ denotes a scaling constant that accounts for the observation period and unit conversions.

The above described concept for counting moving objects 102 passing a plurality of different areas $108_1$ to $108_m$ within the region of interest is exemplarily summarized in the following based on concrete implementation examples.

The concept uses a region of interest 114 in which objects move in a specific direction 112. In an implementation, the concept can be used for automatic traffic monitoring based on video frames, wherein vehicles 102 move in a predefined direction 112. In other technical implementations, for example, objects 102 may move on an assembly line, or persons 102 (e.g. at airports) may move in a defined direction 112. Thereby, the concept provides a method to count moving objects 102 in video frames in a failsafe manner, or in other words, in a manner tolerant of disturbance.

The method comprises subdividing the predefined image details into a specific number of stripe segments $s_j$, as has already been described in detail with respect to Fig. 6a. The method comprises using an occupation detector determining a binary occupation value for the individual stripe segments. There are various possibilities, in terms of technologies, of implementing the occupation detector. One possibility is the method described above with reference to equations (6), (7) and (8) which calculates the occupation value from the moving edges $108_1$ to $108_m$. In other implementations, the detector might obtain the occupation value, e.g. from the number of motion vectors, the number of feature points, the number of pixels of a specific color (e.g. red taillights for vehicles), a vehicle detector or a person detector.

The method comprises a binary state variable for the individual stripe segments, which binary state variable may adopt the *active* and *inactive* states. The *inactive/active* state transitions (referred to as activation below) as well as *active/inactive* (referred to below as deactivation) of the stripe segments occur as a function of the occupation state and of the occupation states (or transition states) of the neighboring stripe segments. The method comprises counting the number of *active/inactive* state transitions for each stripe segment.

One trivial possibility of counting objects is to count the transitions of the occupation values of the occupation detector. In ideal conditions, this method may provide decent results. However, practical experience has shown that such a method cannot be employed in difficult light and weather conditions since, on the one hand, image interference causes incorrect occupations and, on the other hand, occupied stripe segments are not always detected correctly (e.g. low edge density on the rear wind screen of vehicles). Said problems are improved substantially according to the concept of the present invention, so that traffic census may be implemented with sufficient accuracy even in difficult light and weather conditions. Another advantage of the method is the low requirements placed upon the arithmetic unit/processing unit, so that the method might also be employed with very inexpensive hardware in the future. Nevertheless, there is a relatively complex behavior (comparable with cellular machines) in the event of any of various disturbances.

Note that the above described equations are specific examples of how the activation and deactivation functions can be realized on the basis of the occupation state, the occupation state of the neighboring stripe segments, and the transition states of the neighboring stripe segments. However, it is also possible to obtain good results with a slightly modified deactivation function.

Embodiments of the present invention provide a method for counting moving objects 102 from video frames in a region of interest 114 with stripe segments which obtain an occupation value from a detector and for which a binary state value *(active/inactive* states) is continuously/successively (in each frame) determined in a state model, wherein changes of states are determined by means of implementing a Boolean activation function *(inactive/active* transition) or deactivation function *(active/inactive* transition), respectively, which are determined from the occupation state of the stripe segment, the occupation state of the neighboring stripe segments as well as from the transition states of the neighboring stripe segments. Thereby, the *active/inactive* transitions per stripe segments are counted, and an aggregated value (e.g. median, arithmetic mean, etc.) over all of the stripe segments is used as a measured value for counting moving objects.

For each stripe segment, the occupation detector continuously/successively (i.e. in each video frame) determines an occupation value $occ(s_j)$. Additionally, the transition state $t(s_j)$ is also continuously/successively determined, for each stripe, as a change in the occupation value (with regard to the frame temporally preceding it). The transition state $t(s_j)$ may adopt the four following states (as shown in Fig. 8): constantly/invariably non-occupied, change from occupied to non-occupied, change from non-occupied to occupied, constantly/invariably occupied.

In addition, for each stripe segment it is continuously determined, whether the stripe segment is located in a cluster of occupied stripe segments, the cluster having a specific minimum size (*inCluster* function). An occupation cluster here designates a sequence of occupied stripe segments:

$$occ(s_j) = 1 \; with \; a < j < b \; and \; (b - a)C_s \qquad\qquad (11)$$

wherein *a* is the starting index of the cluster, *b* is the final index of the cluster, and $C_s$ is a predefined minimum cluster size. Note that, utilization of clustering is not an integral part of the concept described herein, but may additionally be used as a criterion (as is described in equation (8)).

In addition to the above-mentioned values, there is a state variable for each stripe segment, which state variable may exhibit the *active* and *inactive* states. Implementation of the state transitions is described above in Fig. 6 and in equation (8).

In embodiments, there is a Boolean activation function which provides, on the basis of the occupation value of the stripe segment, the occupation value of the neighboring stripe segments and of the transition states of the neighboring stripe segments, a binary value which controls or drives the state transitions from inactive to active (i.e. transition of the state variable from inactive to active if the activation function yields true). Furthermore, there is a Boolean deactivation function which provides, on the basis of the occupation value of the stripe segment, the occupation value of the neighboring stripe segments and of the transition states of the neighboring stripe segments, a binary value which controls or drives the state transitions from active to inactive (i.e. transition of the state variable from active to inactive if the deactivation function yields true).

The method performed for each area of the plurality of different areas (e.g. stripes) includes the following steps. In a first step, an occupation state is determined. In a second step, the transition state is determined. In a third step, a cluster of stripe segments is formed. In a fourth step, the activation function/deactivation function is performed. In a fifth step, the state variable will be set to *active* if the activation function *true* is returned. In a sixth step, the state variable will be set to *inactive,* and the count number or measurement of the stripe segment will be increased if the deactivation function *true* is returned. In a seventh step, if both the activation function and the deactivation function return *false,* this state will be maintained, which may be suitably used for increasing the fail-safety or disturbance tolerance if the activation function/deactivation function is suitably selected.

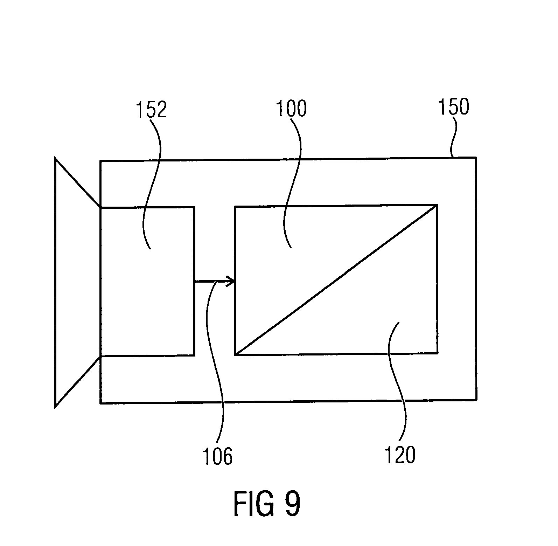

In the following, an implementation of the above described detector 100 and/or detector 120 as a system for video-based traffic state detection is described in detail making reference to Figs. 9 to 12b.

Fig. 9 shows a block diagram of a system 150 according to an embodiment of the present invention. The system 150 comprises a camera 152 and at least one of the detector 100 shown in Fig. 1 and the detector 120 shown in Fig. 5. Naturally, the system 150 may also comprise both, the detector 100 and the detector 120. The camera 152 can be configured to provide the video sequence 106 comprising a plurality of frames $104_1$ to $104_w$, including the earlier frame $104_{i-1}$, the current frame $104_i$ and the subsequent frame $104_{i+1}$. The camera 152 can be a traffic camera directed to a fixed traffic area, wherein the moving object 102 can be a vehicle, e.g. a car, a bike or a truck, passing the traffic area.

According to some embodiments, the system 150 can be implemented by means of an intelligent camera as will become clear from the following discussion. Thereby, the smart camera 150 can be configured to perform the video analysis method for traffic state detection according to the concept of the present invention. Naturally, the video analysis method for traffic state detection can also be implemented by the detector 100 shown in Fig. 1 and/or the detector 120 shown in Fig. 5.

The video analysis method according to the concept of the present invention is designed to run on a smart camera. The smart camera can include a 1280x1024 (SXGA) color CCD (CCD = charge-coupled device) sensor that is connected to an embedded processor board. The processor board can be equipped, for example, with an Intel Atom Z 530, 1.6 GHz processor, 1024 MB RAM and a 32 GB solid state disk for internal storage. The processor may run a standard Linux distribution that provides flexible integration of additional hardware components and external software libraries. The smart camera 150 can be connected to a video network through, for example, a Gigabit Ethernet interface. Every time the camera detects an event, it can use a web service interface to send an event description and the associated video sequence to a back-end traffic information system.

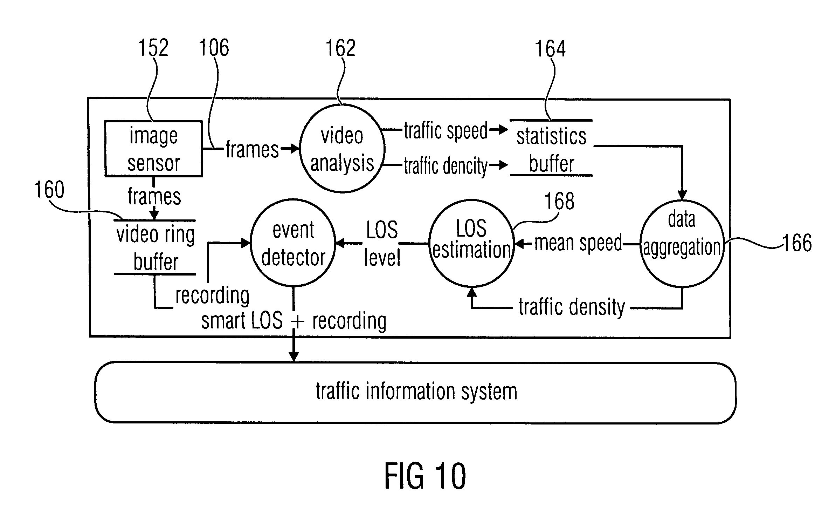

Fig. 10 shows a flowchart of the video analysis method for traffic state detection according to an embodiment. In other words, Fig. 10 shows the data flow of the video-based traffic state detection that can be implemented on the smart camera 150. The image sensor 152 can act as a data source providing the raw video data 106 with a frame rate of, for example, 19 fps. The captured frames can be written to a video ring buffer 160 and passed to a video analysis module 162. For each frame, the video analysis module 162 can compute the estimated speed and traffic density values as described above in detail and store them in a statistics buffer 164. At periodic intervals, e.g. every minute, a data aggregation module 166 can use the data from the statistics buffer 164 and compute the current mean traffic speed and density estimates as described above in detail. These traffic speed and density estimates can be used to calculate a prevailing level of service (LOS) 168.

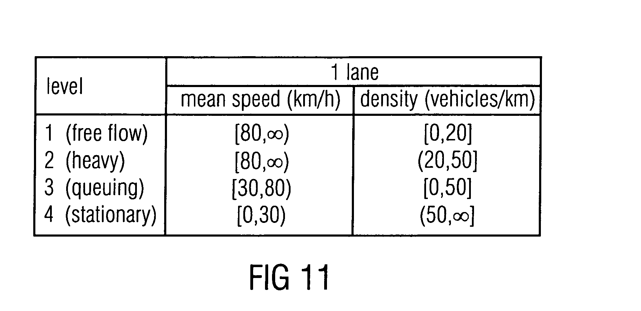

LOS is a qualitative measure that describes the operational conditions of a segment or traffic stream. According to [Bundesanstalt für Straßenwesen (BASt). Merkblatt für die Ausstattung von Verkehrsrechnerzentralen und Unterzentralen. Code of practice, Bundesanstalt für Straßenwesen (BASt), Bergisch Gladbach, Germany, 1999.], four LOS classes can be defined: free-flow traffic, heavy traffic, queuing traffic, and stationary traffic. Fig. 11 shows in a table the LOS definition for a single lane, depending on the measured mean speed and traffic density.

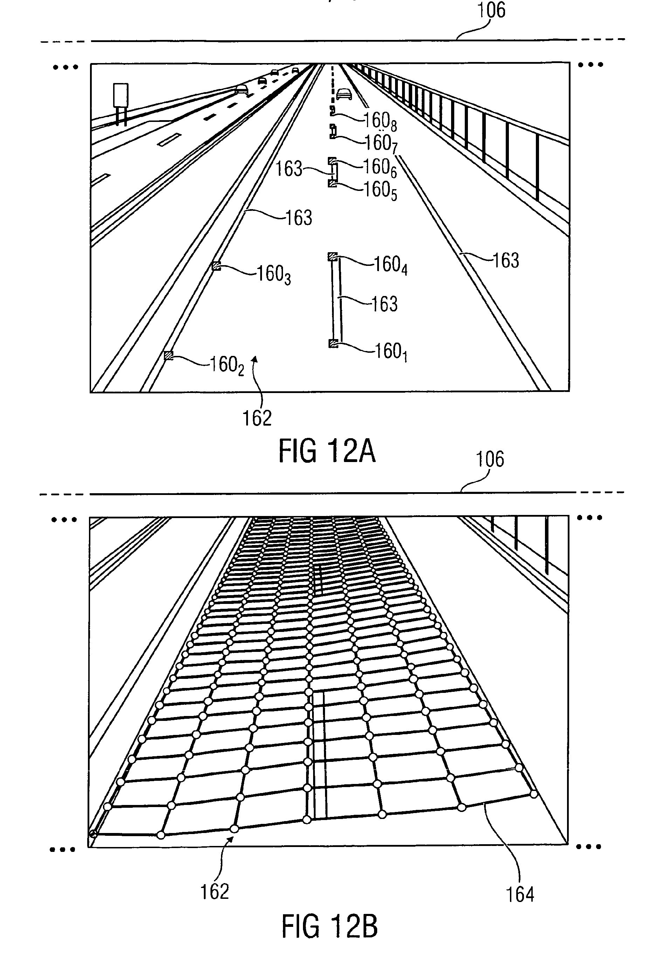

Fig. 12a shows an illustrative view of a frame of the video sequence 106 showing a fixed traffic area and an overlayed projection of a plurality of calibration points $160_1$ to $160_p$, wherein p is a natural number greater than or equal to two ($p \geq 2$). As shown in Fig. 12a, the fixed traffic area can be a road having one or more lanes 162, wherein the calibration points $160_1$ to $160_p$ can be located on the lane markings 163. Based on the calibration points $160_1$ to $160_p$ and known dimensions of the lane 162 and the lane markings 163, calibration parameters for the transformation between video frame coordinates and world coordinates can be obtained. The calibration parameters can be stored, for example, in a lookup table which can be accessed by the detector 100 in order to project the video frame coordinates of the valid motion vectors into the world coordinates on the predefined plane.

Fig. 12b shows an illustrative view of a frame of the video sequence 106 showing the fixed traffic area and an overlayed projection of a grid 164 obtained based on the calibration parameters.

In other words, for the video analysis method according to the concept of the present invention, the length of motion vectors can be used for speed estimation. To model the perspective projection of the camera from 3D world coordinates to 2D image coordinates, the well known pinhole camera model [R. Hartley and A. Zisserman. Multiple view geometry in computer vision, volume 2. Cambridge Univ Press, 2000.] in conjunction with a polynomial lens distortion model can be used. Camera parameters (or calibration parameters) can be obtained from known point correspondences using Zhang's calibration method. The point correspondences (calibration points) can be obtained, for example, from known distances of lane markings, as well as lane length and width. Fig. 12a depicts the calibration points $160_1$ to 160p used for calibration of a smart camera 150, which can be located, for example, on a national motorway. The y-axis of the world coordinate system can be chosen in direction of the lane markers 163 (i.e., towards driving direction 112). Figure 12b shows a 1-by-1 meter grid that was generated from the computed camera parameters.

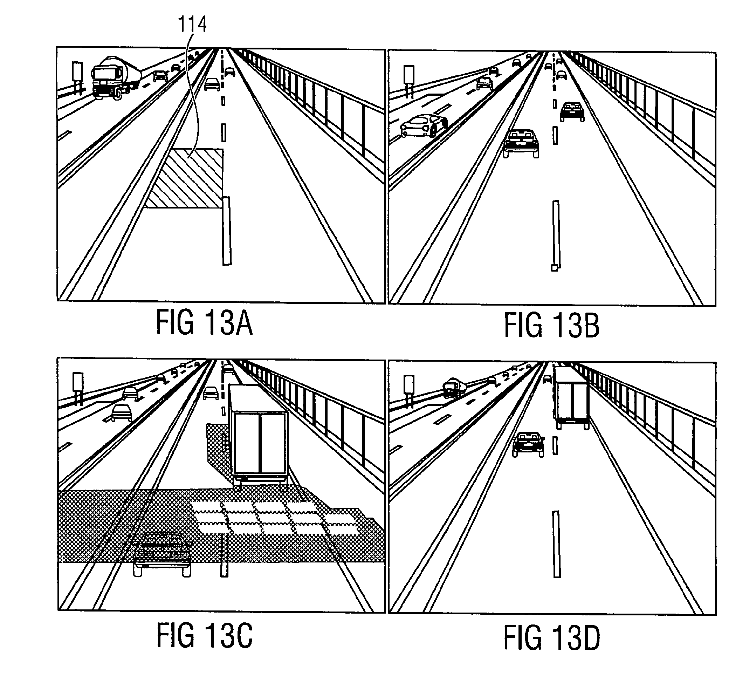

For evaluating the video-based traffic state detection according to the concept of the present invention, 156 hours of video data were used that were recorded at successive days in July and August 2011 by the smart camera 150 mounted at a gantry on the national motorway. The video sequences were recorded at daylight conditions at VGA resolution and a frame rate of 16 frames per second. All recordings were taken with the same camera orientation at the same camera location. For the speed estimations, the exact frame times obtained from the image sensor driver were used. The video sequences include traffic situations with different traffic states (all LOS levels) as well as weather and illumination conditions (i.e., sunny, cloudy, light rain, and heavy rain). The ROI 114 was defined manually on the left lane as shown in Figure 13a (dashed area) and 0.5 m was used as stripe width. Mean speed and traffic density values were computed over one minute intervals. The results were compared to the measurements of a triple-tech traffic sensor mounted next to the smart camera. The triple-tech traffic sensor combines doppler radar, passive infrared, and ultrasound for speed measurement and vehicle counting. To evaluate the robustness of the method according to the concept of the present invention for different conditions, the video data was manually annotated regarding weather and lightning conditions. The classification results were clustered in the following four (non-disjoint) categories: (1) No shadows or light shadows smaller than the lane, (2) large shadows, larger than the lane, (3) wet road or water on road, and (4) dry road. Figs. 13a to 13d shows examples for the different weather and lighting conditions. The video analysis results were compared to the reference measurements, and the precision, recall, and accuracy values were calculated for the individual LOS classes. For practical reasons (i.e., more disk space, less computation time), the video data for this evaluation was analyzed on a server using the same implementation that runs on the smart camera. Live tests on the smart camera showed a mean execution time in the range of 30ms per frame.

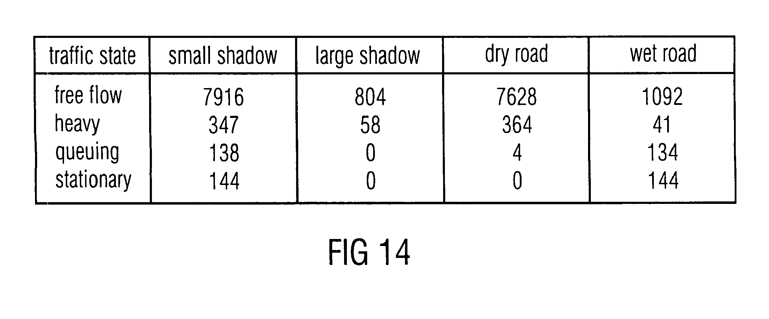

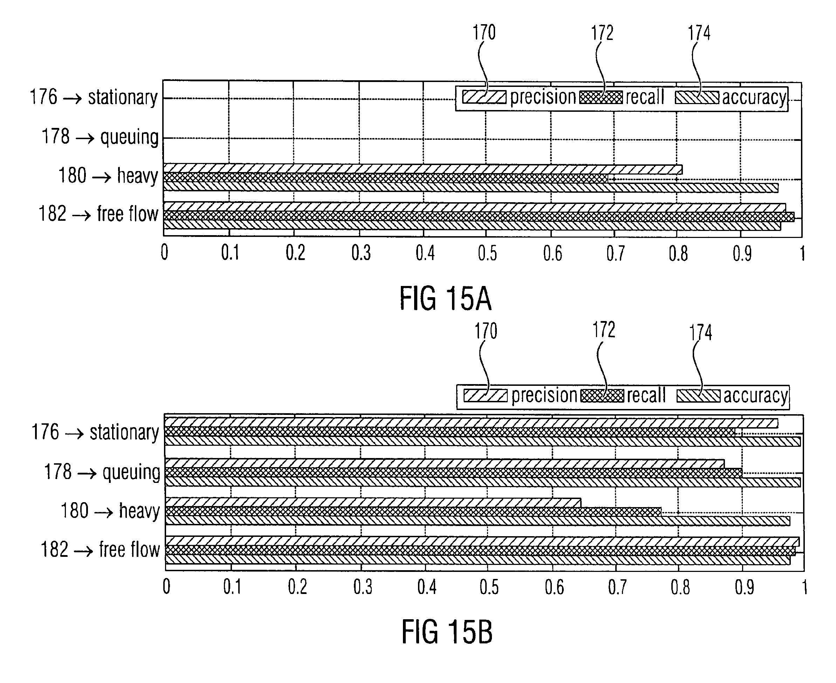

Fig. 14 shows in a table the distribution of the test data (number of samples) for the different road conditions and traffic states. The evaluation results are shown in Figs. 15a to 15e and indicate a high precision and robustness of the method according to the present invention. The precision for the individual LOS levels does not show significant variations with respect to the different weather and lighting conditions. Stationary traffic is detected reliably also at difficult weather conditions (precision > 95%). Free flow traffic is also detected very reliable (99% precision on the entire test set).

Thereby, Fig. 15a shows in a diagram evaluation results of the traffic state detection method based on precision 170, recall 172 and accuracy 174 under large shadow conditions. Thereby, the ordinate denotes the different traffic conditions stationary 176, queuing 178, heavy 180 and free flow 182, where the abscissa denotes the normed values for precision, recall and accuracy.

Fig. 15b shows in a diagram evaluation results of the traffic state detection method based on precision 170, recall 172 and accuracy 174 under small shadow/no shadow conditions. Thereby, the ordinate denotes the different traffic conditions stationary 176, queuing 178, heavy 180 and free flow 182, where the abscissa denotes the normed values for precision, recall and accuracy.

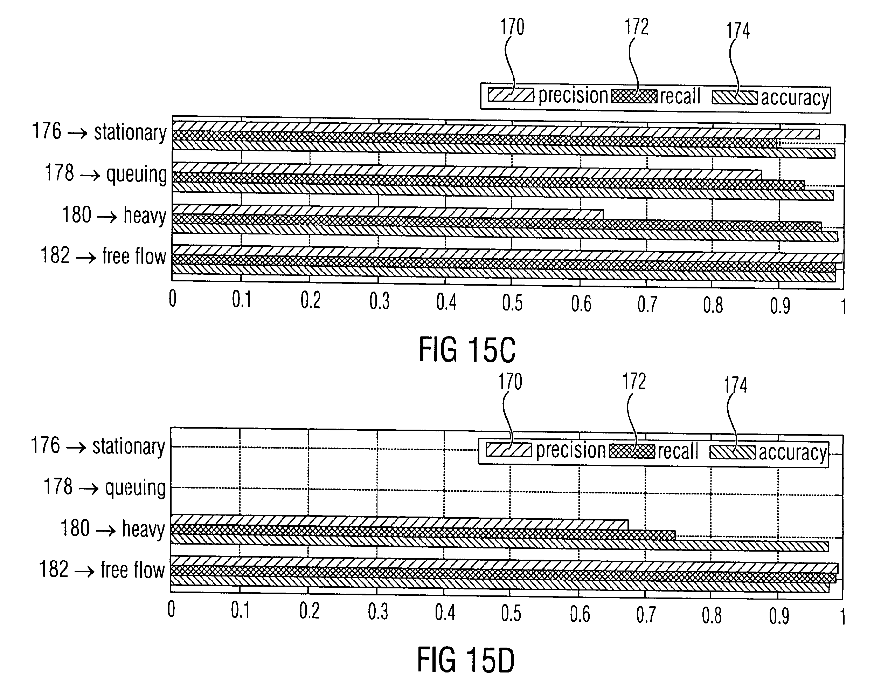

Fig. 15c shows in a diagram evaluation results of the traffic state detection method based on precision 170, recall 172 and accuracy 174 under wet road/water on road conditions. Thereby, the ordinate denotes the different traffic conditions stationary 176, queuing 178, heavy 180 and free flow 182, where the abscissa denotes the normed values for precision, recall and accuracy.

Fig. 15d shows in a diagram evaluation results of the traffic state detection method based on precision 170, recall 172 and accuracy 174 under dry road conditions. Thereby, the ordinate denotes the different traffic conditions stationary 176, queuing 178, heavy 180 and free flow 182, where the abscissa denotes the normed values for precision, recall and accuracy.

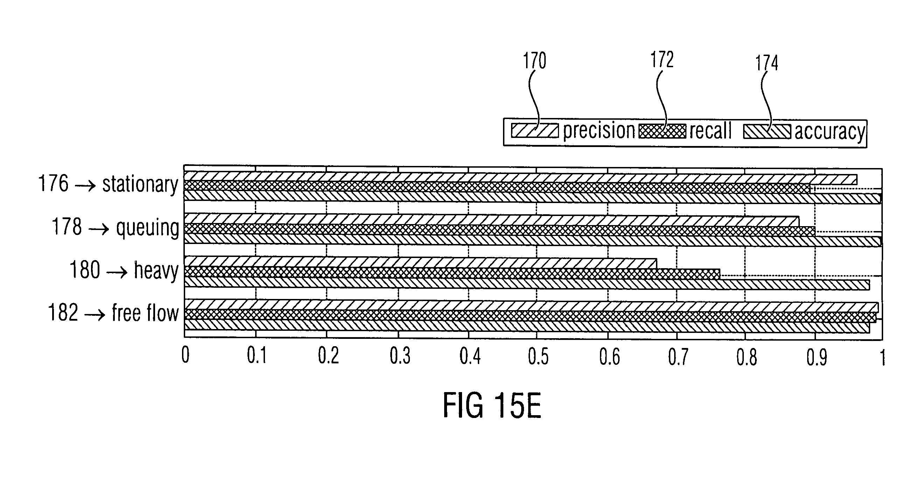

Fig. 15e shows in a diagram evaluation results of the traffic state detection method based on precision 170, recall 172 and accuracy 174 for the entire test set. Thereby, the ordinate denotes the different traffic conditions stationary 176, queuing 178, heavy 180 and free flow 182, where the abscissa denotes the normed values for precision, recall and accuracy.

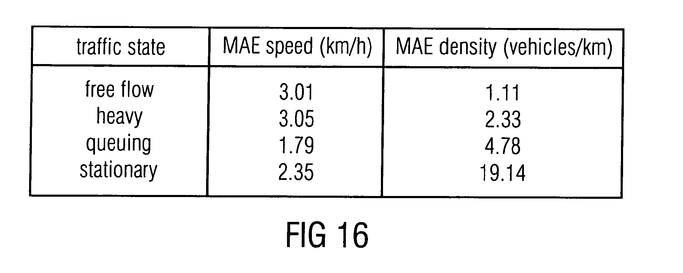

The evaluation shows a lower precision (67% on the entire test set) for heavy traffic. The discrimination between free flow traffic and heavy traffic is only related to traffic density (cp. definition of LOS in the Table shown in Fig. 11). Detailed analysis of reference data indicates two major reasons for the lower detection rate of heavy traffic. First, heavy rain can lead to significant image blur and lowers the edge density, which sometimes leads to lower vehicle counts. Second, the test set contains a high amount of borderline cases, where small deviations lead to classification errors (44% of misclassified heavy traffic samples differ only by 1 vehicle/km from free flow traffic). In addition to the LOS-based evaluation of the traffic state detection method according to the concept of the present invention, the reference data from the triple-tech sensors were used to obtain the mean absolute error (MAE) for the described mean speed and traffic density estimation methods. Fig. 16 shows in a table the MAE for the different traffic states, evaluated on the entire test set. The figures indicate the high quality of the presented methods for automatic video surveillance. The accuracy of the traffic density estimation decreases only for very high traffic density values (e.g., with stop and go traffic), which has no impact on the quality of the traffic state detection.

Embodiments provide a novel method for video-based traffic state detection on motorways performed on smart cameras 150. Camera calibration parameters can be obtained from the novel length of lane markings. Mean traffic speed can be estimated from KLT optical flow using a robust outlier detection. Traffic density can be estimated using a robust statistical counting method. The method described herein has been implemented on an embedded smart camera 150 and evaluated under different road and illumination conditions. It achieves a detection rate of 98% for stationary traffic.

Furthermore, embodiments provide a novel vision-based traffic state detection method that can be implemented on an embedded smart camera 150. The method uses optical flow and a robust cascaded outlier detection for speed estimation, and a robust statistical counting for traffic density estimation. The camera calibration parameters can be obtained from the known length and distances of lane markings. The above provided evaluations on the comprehensive test video set show the robustness of the method described herein for different weather and illumination conditions. Thereby, stationary traffic can be detected with a precision of 95.8%.

Moreover, embodiments provide a fast and accurate method for estimating the average traffic speed and traffic density on the motorway for smart cameras. In contrast to most other methods, feature statistics can be used to estimate the mean speed and traffic density. The mean speed can be obtained from optical flow analysis and the traffic density can be calculated from edge information. Speed and traffic density values can be combined to compute the so-called level of service (LOS) that describes the prevailing traffic state. The presented method has been implemented on a smart camera and evaluated under real-world conditions.

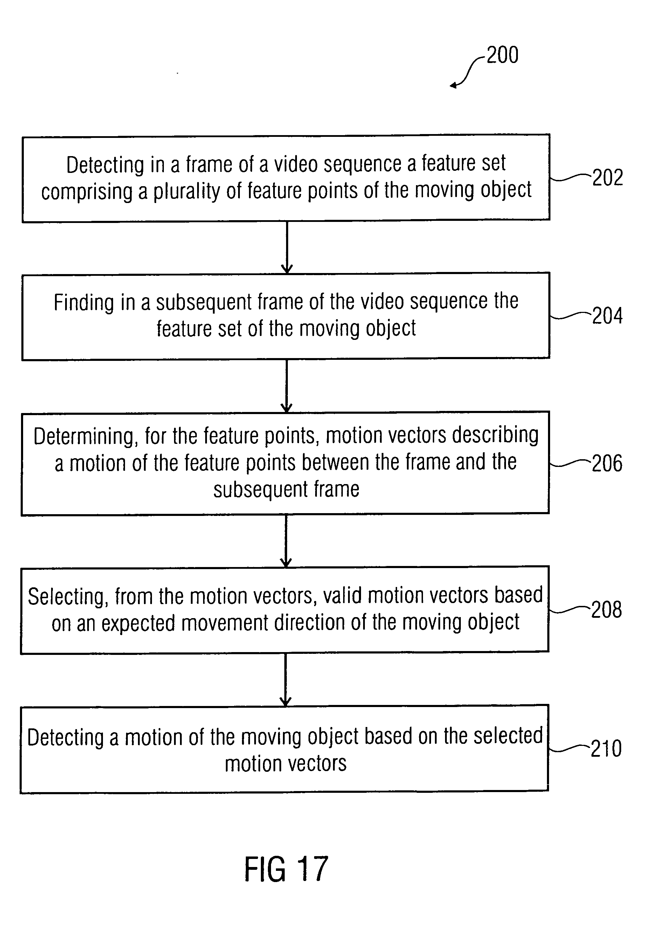

Fig. 17 shows a flowchart of a method 200 for detecting a motion of a moving object. A first step 202 of the method 200 comprises detecting in a frame of a video sequence a feature set comprising a plurality of feature points of the moving object. A second step 204 of the method 200 comprises finding in a subsequent frame of the video sequence the feature set of the moving object. A third step 206 of the method 200 comprises determining, for the feature points, motion vectors describing a motion of the feature points between the frame and the subsequent frame. A fourth step 208 of the method 200 comprises selecting, from the motion vectors, valid motion vectors based on an expected movement direction of the moving object. A fifth step 210 of the method 200 comprises detecting a motion of the moving object based on the selected motion vectors.

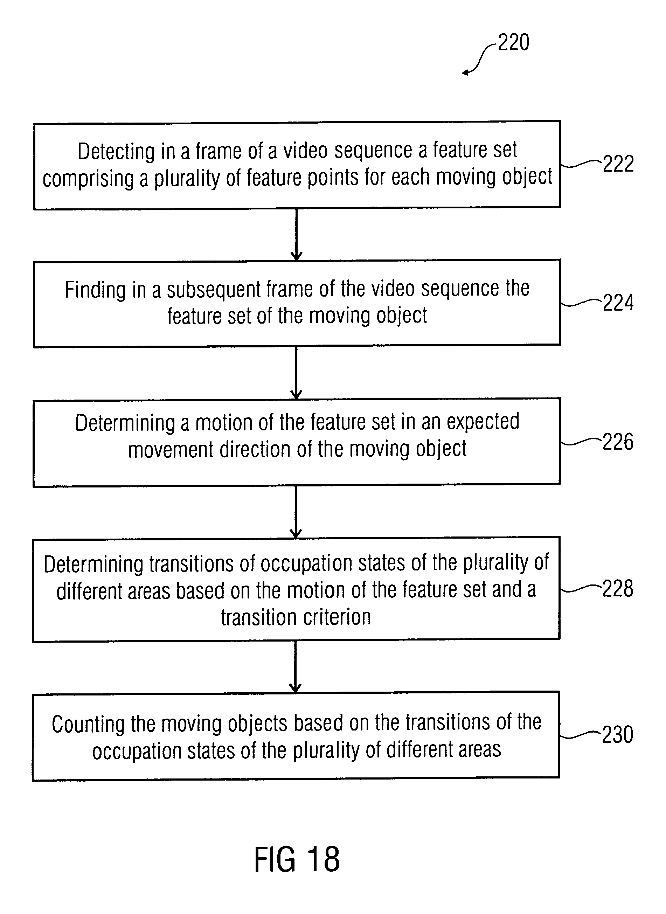

Fig. 18 shows a flowchart of a method 220 for counting moving objects passing a plurality of different areas within a region of interest. A first step 222 of the method 220 comprises detecting in a frame of a video sequence a feature set comprising a plurality of feature points for each moving object. A second step 224 of the method 220 comprises finding in a subsequent frame of the video sequence the feature set of the moving object. A third step 226 of the method 220 comprises determining a motion of the feature set in an expected movement direction of the moving object. A fourth step 228 of the method 220 comprises determining transitions of occupation states of the plurality of different areas based on the motion of the feature set and a transition criterion. A fifth step 230 of the method 220 comprises counting the moving objects based on the transitions of the occupation states of the plurality of different areas.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1.  Detector (120) for counting moving objects (102) passing a plurality of different areas ($115_1$ - $115_s$) within a region of interest (114), wherein the detector (120) is configured to detect in a frame ($104_i$) of a video sequence (106) a feature set (107) comprising a plurality of feature points ($108_1$ - $108_m$) for each moving object (102), and to find in a subsequent frame ($108_{i+1}$) of the video sequence (106) the feature set (107) of the moving object (102), and to determine a motion of the feature set (107) in an expected movement direction (112) of the moving object (102), and to determine transitions of occupation states of the plurality of different areas ($115_1$-$115_s$) based on the motion of the feature set (107) and a transition criterion, and to count the moving objects (102) based on the transitions of the occupation states of the plurality of different areas ($115_1$ - $115_s$).

2. Detector (120) according to claim 1, wherein the different areas of the plurality of different areas ($115_1$ - $115_s$) are stripes arranged parallel to each other in a single-row.

3. Detector (120) according to claim 1 or 2, wherein the different areas of the plurality of different areas ($115_1$ - $115_s$) are aligned along an expected movement direction (112) of the one or more objects (102).

4. Detector (120) according to one of the claims 1 to 3, wherein the detector (120) is configured to determine occupation conditions of the plurality of different areas ($115_1$ - $115_s$) by the one or more objects (102) based on the motion of the feature set, and to determine the transitions of the occupation states based on the occupation conditions of the plurality of different areas ($115_1$ - $115_s$).

5. Detector (120) according claim 4, wherein the transition criterion comprises an active transition criterion, and wherein the detector (120) is configured to determine for each area ($115_j$) of the plurality of different areas ($115_1$ - $115_s$) a transition of the occupation state from inactive (142) to active (140), if the occupation condition is active and if the active transition criterion is fulfilled.

6. Detector (120) according to claim 5, wherein the active transition criterion states that the respective area ($115_j$) is part of a cluster of areas, the cluster of areas comprising at least three contiguous areas of the plurality of different areas ($115_1$ - $115_s$).

7. Detector (120) according to claim 6, wherein the active transition criterion is described by the equation:

$$a(s_j)_i = (j = 1) \lor \left( occ(s_{j-1})_i = 1 \right) \land inCluster(s_j, i)$$

wherein $a(s_j)_i$ is the active transition criterion of the respective area $s_j$ ($115_j$) of the plurality of different areas ($115_1$ to $115_s$) in the frame ($104_i$), $occ(s_{j-1})_i = 1$ states that the occupation condition of an aforegoing area $s_{j-1}$ ($115_{j-1}$) aforegoing the respective area $s_j$ ($115_j$) along the expected movement direction (112) of the moving object (102) is active in the frame ($104_i$), and *inCluster ($s_j$, i)* is a function that returns true if the respective area $s_j$ ($115_j$) is part of the cluster of areas.

8. Detector (120) according to one of the claims 4 to 7, wherein the transition criterion comprises an inactive transition criterion, and wherein the detector (120) is configured to determine for each area ($115_j$) of the plurality of different areas ($115_1$ - $115_s$) a transition of the occupation state from active (140) to inactive (142), if the occupation condition is inactive and if the inactive transition criterion is fulfilled.

9. Detector (120) according to claim 8, wherein the inactive transition criterion states that the occupation conditions of areas of the plurality of different areas ($115_1$ - $115_s$) neighboring the respective area ($115_j$) indicate a movement of the moving object (102) along the expected movement direction (112).

10. Detector (120) according to claim 8 or 9, wherein the inactive transition criterion is described by the equation:

$$d(s_j)_i = \left( t(s_{j+1}) \neq 0 \right) \land \left( t(s_{j-1}) \neq 1 \right)$$

wherein $d(s_j)_i$ is the inactive transition criterion of the respective area $s_j$ ($115_j$) of the plurality of different areas ($115_1$ to $115_s$) in the frame ($104_i$), $t(s_{j+1})$ is a transition state of a following area $s_{j+1}$ ($115_{j+1}$) following the respective area ($115_j$) along the expected movement direction (112) of the moving object (102) defined in a table, and $t(s_{j-1})$ is a transition state of a aforegoing area $s_{j-1}$ ($115_{j-1}$) aforegoing the respective area $s_{j+1}$ ($115_j$) along the expected movement direction (112) of the moving object (102) defined in the table.

11. Detector (120) according to one of the claims 4 to 10, wherein the detector (120) is configured to count the moving objects (102) based on an average of the transitions of occupation states of the plurality of different areas ($115_1$ - $115_s$) from active to inactive or from inactive to active.

**12.** System (150), comprising:

a detector (120) according to one of the claims 1 to 11; and
a camera (152) for providing the video sequence (106) comprising the current frame ($104_i$) and the earlier frame ($104_{i-1}$).

**13.** System (150) according to claim 12, wherein the camera (152) is a traffic camera directed to a fixed traffic area, wherein the moving object (102) is a vehicle passing the traffic area.

**14.** Method for counting moving objects passing a plurality of different areas within a region of interest, the method comprising:

detecting in a frame of a video sequence a feature set comprising a plurality of feature points for each moving object;
finding in a subsequent frame of the video sequence the feature set of the moving object;
determining a motion of the feature set in an expected movement direction of the moving object;
determining transitions of occupation states of the plurality of different areas based on the motion of the feature set and a transition criterion; and
counting the moving objects based on the transitions of the occupation states of the plurality of different areas.

**15.** Computer program having a program code for performing, when running on a computer or microprocessor, a method according to claim 14.

FIG 1

EP 2 709 065 A1

FIG 2

FIG 3

FIG 4

EP 2 709 065 A1

EP 2 709 065 A1

FIG 5

FIG 6B

$104_{i+1}$

106

FIG 6A

$104_i$

140

$$(occ(s_j)_i = 1) \wedge a(s_j)_i$$

inactive → active

$$(occ(s_j)_i = 0) \wedge d(s_j)_i$$

142

FIG 7

| $t(s_j)_i$ | $occ(s_j)_{i-1}$ | $occ(s_j)_i$ |
|---|---|---|
| 0 | 0 | 0 |
| 1 | 0 | 1 |
| 2 | 1 | 0 |
| 3 | 1 | 1 |

FIG 8

FIG 9

FIG 10

EP 2 709 065 A1

| level | 1 lane | |
|---|---|---|
| | mean speed (km/h) | density (vehicles/km) |
| 1 (free flow) | [80,∞) | [0,20] |
| 2 (heavy) | [80,∞) | (20,50] |
| 3 (queuing) | [30,80) | [0,50] |
| 4 (stationary) | [0,30) | (50,∞] |

# FIG 11

106

$160_8$
$160_7$
163
$160_6$
$160_5$
163
$160_3$
163
$160_4$
163
$160_1$
$160_2$
162

FIG 12A

106

162
164

FIG 12B

FIG 13A

FIG 13B

FIG 13C

FIG 13D

| traffic state | small shadow | large shadow | dry road | wet road |
|---|---|---|---|---|
| free flow | 7916 | 804 | 7628 | 1092 |
| heavy | 347 | 58 | 364 | 41 |
| queuing | 138 | 0 | 4 | 134 |
| stationary | 144 | 0 | 0 | 144 |

FIG 14

EP 2 709 065 A1

EP 2 709 065 A1

FIG 15A

FIG 15B

170       172       174

[[[[[precision [[[[[recall [[[[[accuracy

176 → stationary

178 → queuing

180 → heavy

182 → free flow

0   0.1   0.2   0.3   0.4   0.5   0.6   0.7   0.8   0.9   1

FIG 15C

170       172       174

176 → stationary

178 → queuing

[[[[[precision [[[[[recall [[[[[accuracy

180 → heavy

182 → free flow

0   0.1   0.2   0.3   0.4   0.5   0.6   0.7   0.8   0.9   1

FIG 15D

FIG 15E

| traffic state | MAE speed (km/h) | MAE density (vehicles/km) |
|---|---|---|
| free flow | 3.01 | 1.11 |
| heavy | 3.05 | 2.33 |
| queuing | 1.79 | 4.78 |
| stationary | 2.35 | 19.14 |

## FIG 16

200

Detecting in a frame of a video sequence a feature set
comprising a plurality of feature points of the moving object

202

Finding in a subsequent frame of the video sequence the
feature set of the moving object

204

Determining, for the feature points, motion vectors describing
a motion of the feature points between the frame and the
subsequent frame

206

Selecting, from the motion vectors, valid motion vectors based
on an expected movement direction of the moving object

208

Detecting a motion of the moving object based on the selected
motion vectors

210

FIG 17

_220_

Detecting in a frame of a video sequence a feature set comprising a plurality of feature points for each moving object — 222

Finding in a subsequent frame of the video sequence the feature set of the moving object — 224

Determining a motion of the feature set in an expected movement direction of the moving object — 226

Determining transitions of occupation states of the plurality of different areas based on the motion of the feature set and a transition criterion — 228

Counting the moving objects based on the transitions of the occupation states of the plurality of different areas — 230

FIG 18

**EUROPEAN SEARCH REPORT**

Europäisches
Patentamt
European
Patent Office
Office européen
des brevets

Application Number

EP 12 18 4741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELIX PLETZER ET AL: "Feature-based level of service classification for traffic surveillance", INTELLIGENT TRANSPORTATION SYSTEMS (ITSC), 2011 14TH INTERNATIONAL IEEE CONFERENCE ON, IEEE, 5 October 2011 (2011-10-05), pages 1015-1020, XP032023496, DOI: 10.1109/ITSC.2011.6083101 ISBN: 978-1-4577-2198-4 * abstract * * page 1017, column 1, paragraph 1 - paragraph 2 * * page 1017, column 1, paragraph 4 * * page 1017, column 2, paragraphs 1,3 * * figure 1 * | 1-15 | INV. G06T7/20 G06K9/00 |

-----

TECHNICAL FIELDS
SEARCHED (IPC)

G06T
G06K

The present search report has been drawn up for all claims

| Place of search | Date of completion of the search | Examiner |
|---|---|---|
| Munich | 7 March 2013 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. SCHNEIDER ; M. LINAUER ; N. HAINITZ ; H. KOLLER.** Traveler information service based on real-time toll data in Austria. *Intelligent Transport Systems, IET,* 2009, vol. 3 (2), 124-137
- **M. BRAMBERGER ; A. DOBLANDER ; A. MAIER ; B. RINNER ; H. SCHWABACH.** Distributed embedded smart cameras for surveillance applications. *Computer,* February 2006, vol. 39 (2), 68-75
- **C. STAUFFER ; W. GRIMSON.** Adaptive background mixture models for real-time tracking. *IEEE Conference on Computer Vision and Pattern Recognition,* 1999, vol. 2, 246-252
- **Z. ZIVKOVIC.** Improved adaptive Gaussian mixture model for background subtraction. *17th International Conference on Pattern Recognition,* 2004, vol. 2, 28-31
- **S.-C. S. CHEUNG ; C. KAMATH.** Robust background subtraction with foreground validation for urban traffic video. *EURASIP Journal on Applied Signal Processing,* 2005, vol. 14, 2330-2340
- **D. BEYMER ; P. MCLAUCHLAN ; B. COIFMAN ; J. MALIK.** A real-time computer vision system for measuring traffic parameters. *IEEE Conference on Computer Vision and Pattern Recognition,* 1997, 495-501
- **F. PLETZER ; R. TUSCH ; L. BOSZORMENYI ; B. RINNER ; O. SIDLA ; M. HARRER ; T. MARIACHER.** Feature-based level of service classification for traffic surveillance. *14th Intl. IEEE Conference on Intelligent Transportation Systems,* 2011, 1015-1020
- **J. CHEN ; T. EVAN ; L. ZHIDONG.** A machine learning framework for real-time traffic density detection. *Intl. Journal of Pattern Recognition and Artificial Intelligence,* 2009, vol. 23 (07), 1265-1284

- **P. M. ROTH ; S. STERNIG ; H. GRABNER ; H. BISCHOF.** Classifier grids for robust adaptive object detection. *IEEE Conference on Computer Vision and Pattern Recognition,* 2009, 2727-2734
- **M. PUCHER ; D. SCHABUS ; P. SCHALLAUER ; Y. LYPETSKYY ; F. GRAF ; H. RAINER ; M. STADTSCHNITZER ; S. STERNIG ; J. BIRCHBAUER ; W. SCHNEIDER et al.** Multimodal highway monitoring for robust incident detection. *13th Intl. IEEE Conference on Intelligent Transportation Systems,* 2010, 837-842
- **O. SIDLA ; E. WILDLING ; Y. LYPETSKYY.** Vehicle detectionmethods for surveillance applications. *Proceedings of SPIE,* 2006, vol. 6384
- **H. BISCHOF ; M. GODEC ; C. LEISTNER ; B. RINNER ; A. STARZACHER.** Autonomous audio-supported learning of visual classifiers for traffic monitoring. Intelligent Systems. *IEEE,* 2010, vol. 25 (3), 15-23
- **B. D. LUCAS ; T. KANADE.** An iterative image registration technique with an application to stereo vision. *Proc. of the 7th Intl. Joint Conference on Artificial Intelligence,* 1981, 674-679
- Bundesanstalt für Straßenwesen (BASt). Merkblatt für die Ausstattung von Verkehrsrechnerzentralen und Unterzentralen. *Code of practice, Bundesanstalt für Straßenwesen (BASt), Bergisch Gladbach, Germany,* 1999
- **R. HARTLEY ; A. ZISSERMAN.** Multiple view geometry in computer vision. Cambridge Univ Press, 2000, vol. 2